# EUROPEAN PATENT SPECIFICATION

(11) **EP 3 572 869 B1**
(45) Date of publication and mention of the grant of the patent: **16.03.2022**
(21) Application number: 17825091.6
(22) Date of filing: 14.07.2017
(51) Int. Cl.: G02F 1/1337, G02F 1/1335, G02F 1/1362, G02F 1/1343

(54) **DISPLAY SUBSTRATE, MANUFACTURING METHOD THEREFOR, AND DISPLAY PANEL**
ANZEIGESUBSTRAT, HERSTELLUNGSVERFAHREN DAFÜR UND ANZEIGETAFEL
SUBSTRAT D'AFFICHAGE, SON PROCÉDÉ DE FABRICATION, ET PANNEAU D'AFFICHAGE

(30) Priority: 23.01.2017 CN 201710058458
(43) Date of publication of application: 27.11.2019
(73) Proprietor: BOE Technology Group Co., Ltd., Beijing 100015 (CN); Beijing BOE Display Technology Co., Ltd., Beijing 100176 (CN)
(72) Inventor: QIAN, Xueqiang, Beijing 100176 (CN); CHEN, Dongchuan, Beijing 100176 (CN); ZHANG, Zhenyu, Beijing 100176 (CN); LIN, Lifeng, Beijing 100176 (CN); WANG, Fangyu, Beijing 100176 (CN); TANG, Xian, Beijing 100176 (CN)
(74) Representative: Klunker IP Patentanwälte PartG mbB
(86) International application number: PCT/CN2017/092917
(87) International publication number: WO 2018/133343

(56) References cited:
- CN-A- 1 888 966
- CN-A- 101 251 684
- CN-A- 103 197 471
- CN-A- 104 950 525
- JP-A- H 055 886
- KR-A- 20060 016 923
- US-A1- 2001 019 390
- US-A1- 2013 258 226
- US-A1- 2015 146 150

## Description

### TECHNICAL FIELD

The present invention relates to a display substrate, a manufacturing method thereof and a display panel.

### BACKGROUND

Thin Film Transistor Liquid Crystal Displays (TFT-LCDs) have advantages of high resolution, lightness, being slim and so on, and are widely applied to liquid crystal televisions, mobile phones, computer screens and the like. However, owing to the limitation of display mode of non-emissive, transmissivity of liquid crystal display panels is too low, and power consumption of displays is too high. Generally, an array substrate, a color filter substrate and a liquid crystal layer located between the two substrates are included in a liquid crystal display.

US 2015/146 150 A1, on which the preambles of the independent claims are based, discloses a LC panel, a display device comprising the LC panel and a method of manufacturing the LC panel. In the LC panel, the orientation of the LC molecules corresponding to a pixel display region is different from the orientation of the LC molecules corresponding to a wiring region, such that the deflection angle of the LC molecules corresponding to the pixel display region is inconsistent with that of the LC molecules corresponding to the wiring region upon the LC panel being supplied with power. The method of manufacturing the LC panel comprises making the pretilt angle of the alignment layer of the wiring region on the array substrate larger than that of the alignment layer of the pixel display region.

JP H 055 886 A discloses: after an orientation control layer consisting of organic matter on the substrate is subjected to a rubbing treatment, the orientation control layer exclusive of the picture elements is changed in properties by photoirradiation by way of a photomask to orient the LC molecules exclusive of the picture elements in the direction different from the orientation direction of the LC molecules within the picture elements. Namely, only the pretilt of the LC of the parts exclusive of the picture elements is increased by applying energy to the high polymer of the oriented film by light after the rubbing. Gas having a surface reforming effect; for example, gaseous organic silicon, is run simultaneously with the photoirradiation, by which the organic silicon is bonded to the photo-irradiated part. The pretilt is thus largely changed by the short-time irradiation. Then, a black matrix effect is generated by the simple process and the LCD element of a high contrast is produced at a low cost.

US 2001/019 390 A discloses a LCD apparatus including: a pair of substrates opposing each other; a LC layer interposed between the pair of substrates, the LC layer containing LC molecules having a negative dielectric anisotropy; at least one electrode provided on each of the pair of substrates, the at least one electrode being used for applying an electric field across the LC layer; and at least one volume excluding member. One of the at least one volume excluding member is provided on the at least one electrode on at least one of the pair of substrates, the volume excluding member being provided so as to be on at least a portion of one side edge of the at least one electrode. A side of each of the pair of substrates facing the LC layer is subjected to a vertical alignment treatment. The LC molecules are tilted in a uniform direction from the at least one side edge of the at least one electrode to an opposite edge when a voltage is applied to the at least one electrode.

### SUMMARY

It is an objection of the present invention to provide a display substrate, a manufacturing method thereof and a display panel. The object is achieved by the features of the respective independent claims. Further embodiments are defined in the corresponding dependent claims.

Upon being applied with voltage, liquid crystal molecules located in a peripheral region of the display substrate are not deflected, namely, a black-state display effect is rendered by liquid crystal molecules located in the peripheral region of the display substrate, which plays the light shading role of an ordinary black matrix. Thus, it is possible to decrease the size of the black matrix, raise the aperture ratio of pixels, and promote the transmissivity of the display substrate.

Even though the description refers to embodiments or to the invention, it is to be understood that the invention is defined by the claims and embodiments of the invention are those comprising at least all the features of one of the independent claims.

### BRIEF DESCRIPTION OF THE DRAWINGS

In order to clearly illustrate the technical solution of the embodiments of the invention, the drawings of the embodiments will be briefly described in the following; it is obvious that the described drawings are only related to some embodiments of the invention and thus are not limitative of the invention.
FIG. 1a is a schematic view illustrating a display substrate provided by an embodiment of the present disclosure;
FIG. 1b is a schematic view illustrating one pixel unit and an alignment film provided thereon in a base substrate illustrated in FIG. 1a;
FIG. 2a is a schematic view illustrating one pixel unit on an array substrate provided by an embodiment of the present disclosure;
FIG. 2b is a schematic view illustrating an alignment film provided on the pixel unit illustrated in FIG. 2a;
FIG. 3 is a schematic view illustrating a manufacturing method of a display substrate provided by an embodiment of the present disclosure;
FIG. 4a is a schematic view illustrating optical alignment conducted on an alignment film located at a first peripheral region with a mask provided by an embodiment of the present disclosure;
FIG. 4b is a schematic view illustrating a first alignment direction formed on the alignment film illustrated in FIG. 4a;
FIG. 5a is a schematic view illustrating optical alignment conducted on an alignment film located at a second peripheral region with a mask provided by an embodiment of the present disclosure;
FIG. 5b is a schematic view illustrating a second alignment direction formed on the alignment film illustrated in FIG. 5a;
FIG. 6a is a schematic view illustrating optical alignment conducted on an alignment film located at an active display region with a mask provided by an embodiment of the present disclosure;
FIG. 6b is a schematic view illustrating a third alignment direction formed on the alignment film illustrated in FIG. 6a;
FIG. 7a is a schematic view illustrating optical alignment conducted on an alignment film located at a second peripheral region and an active display region with a mask provided by an embodiment of the present disclosure;
FIG. 7b is a schematic view illustrating an alignment direction formed on the alignment film illustrated in FIG. 7a;
FIG. 8a is a schematic view illustrating optical alignment conducted on an alignment film located at a first peripheral region and an active display region with a mask provided by an embodiment of the present disclosure;
FIG. 8b is a schematic view illustrating an alignment direction formed on the alignment film illustrated in FIG. 8a; and
FIG. 9 is schematically sectional view illustrating a display panel provided by an embodiment of the present disclosure.

### DETAILED DESCRIPTION

In order to make objects, technical details and advantages of the embodiments of the invention apparent, the technical solutions of the embodiment will be described in a clearly and fully understandable way in connection with the drawings related to the embodiments of the invention. It is obvious that the described embodiments are just a part but not all of the embodiments of the invention. Based on the described embodiments herein, those skilled in the art can obtain other embodiment(s), without any inventive work.

Unless otherwise specified, the technical terms or scientific terms used in the disclosure have normal meanings understood by those skilled in the art. The words "first", "second" and the like used in the disclosure do not indicate the sequence, the number or the importance but are only used for distinguishing different components. The word "comprise", "include" or the like only indicates that an element or a component before the word contains elements or components listed after the word and equivalents thereof, not excluding other elements or components. The words "on", "under", "left", "right" and the like only indicate the relative position relationship which is correspondingly changed when the absolute position of a described object is changed.

According to an embodiment of the present disclosure, there are provided a display substrate and a manufacturing method thereof, a display panel, and the display substrate includes a base substrate and an alignment film disposed on the base substrate. A plurality of pixel units are formed on the base substrate by partition, and each of the pixel units includes an active display region and a peripheral region located on the periphery of the active display region. The alignment film is located in the active display region and the peripheral region of the pixel unit. The alignment film located at the peripheral region is configured to not cause the aligned liquid crystal molecules located at the peripheral region to deflect during operation, and the alignment film located at the active display region is configured to cause the aligned liquid crystal molecules located at the active display region to deflect during operation. The alignment direction of the alignment film located at a first peripheral region is a first alignment direction perpendicular to a first edge, and the alignment direction of the alignment film located at a second peripheral region is a second alignment direction perpendicular to a second edge. Owing to interaction between liquid crystal molecules located at the first peripheral region and molecules at a surface of the alignment film, long axes of the liquid crystal molecules are parallel to the first alignment direction. Likewise, long axes of liquid crystal molecules located at the second peripheral region are parallel to the second alignment direction. After being applied with voltage, liquid crystal molecules located at the peripheral region of the display substrate come under the influence of an electric field parallel to long-axis direction of the liquid crystal molecules, and hence, liquid crystal molecules at this region are not deflected. Namely, a black-state display effect is rendered by liquid crystal molecules located at the peripheral region, playing the light shading role of an ordinary black matrix. Thus, it is possible to decrease the size of the black matrix, raise the aperture ratio of pixels, and promote the transmissivity of the display substrate.

Hereinafter, a display substrate and a manufacturing method thereof, a display panel provided by embodiments of the present disclosure will be described in conjunction with accompanied drawings.

### First Embodiment

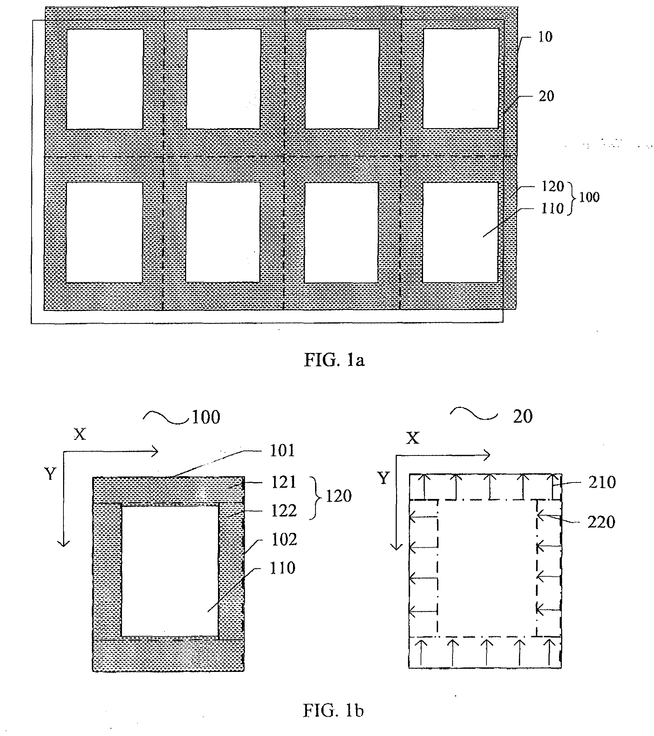

According to the present embodiment, there is provided a display substrate, and FIG. 1a is a schematically stereographic view illustrating a display substrate that includes a base substrate and an alignment film. As illustrated in FIG. 1a, the display substrate includes a base substrate 10 and an alignment film 20 disposed on the base substrate 10. A plurality of pixel units 100 are formed on the base substrate 10 by partition, and each of the pixel units 100 includes an active display region 110 and a peripheral region 120 located on the periphery of the active display region 110. Partition of the plurality of pixel units 100 in FIG. la is created by dashed lines. It is to be noted that, the display substrate provided by the embodiment may be an array substrate in a liquid crystal display panel, and may also be a color filter substrate, and the embodiment does not set a limit to this. When the display substrate is an array substrate, the base substrate is partitioned into a plurality of pixel units 100 by electrode lines (data lines and scanning lines) crossing over each other; and when the display substrate is a color filter substrate, the plurality of pixel units 100 are orthographic projections of a plurality of pixel units of an array substrate in opposition to the color filter substrate onto the color filter substrate.

For example, a left figure of FIG. 1b is a schematic view illustrating one pixel unit 100 on the base substrate 10 in the display substrate illustrated in FIG. 1a, and a right figure of FIG. 1b is a schematic view illustrating an alignment film 20 disposed on the pixel unit 100 illustrated in the left figure of FIG. 1b. As illustrated in FIG. 1b, the peripheral region 120 includes a first peripheral region 121 that lies at a first edge 101 of the pixel unit 100 extending along an X direction (i.e. a first direction) and a second peripheral region 122 that lies at a second edge 102 of the pixel unit 100 extending along a Y direction (i.e. a second direction), and the first direction and the second direction cross each other. The embodiment is not limited to this, and the first direction and the second direction may interchange. In any case, the first direction and the second direction are perpendicular to each other.

For example, the peripheral region 120 includes two first peripheral regions 121, which arc located on two sides of the active display region 110 in the Y direction; and two second peripheral regions 122, which are located on two sides of the active display region 110 in the X direction. The two first peripheral regions 121 and the two second peripheral regions 122 in the embodiment are denoted by dashed-line, rectangular boxes illustrated on pixel unit 100 in the left figure of FIG. 1b, respectively, and dashed-line, rectangular boxes on the alignment film 20 illustrated in the right figure of FIG. 1b correspond to positions of the two first peripheral regions 121 and the two second peripheral regions 122 on the pixel unit 100.

As illustrated in FIG. 1b, the alignment film 20 is located in the active display region 110 and the peripheral region 120 of the pixel unit 100, and, alignment direction of the alignment film 20 located at the first peripheral region 121 is a first alignment direction 210 perpendicular to the first edge 101, and alignment direction of the alignment film 20 located at the second peripheral region 122 is a second alignment direction 220 perpendicular to the second edge 102. The first alignment direction 210 in the embodiment is not limited to the alignment direction illustrated in FIG. 1b that is opposite the Y direction, and may also be an alignment direction that is the same as the Y direction, namely, the first alignment direction 210 includes two alignment directions perpendicular to the X direction. Likewise, the second alignment direction 220 also includes two alignment directions perpendicular to the Y direction. It is to be noted that, the embodiment will be described with reference to an example in which the first peripheral region 121 is the case illustrated in FIG. 1b, namely, the first peripheral region 121 includes a place where the first edge 101 and the second edge 102 cross, and the embodiment is not limited to this. Rather, the place where a first edge and a second edge cross may be partitioned into a first peripheral region or a second peripheral region according to actual situations.

For example, the display substrate is an array substrate, and the peripheral region of the array substrate further includes a plurality of scanning lines extending along a first direction and a plurality of data lines extending along a second direction. The plurality of data lines and the plurality of scanning lines are located at the edge of the peripheral region, and cross and are insulated from each other so as to define a plurality of pixel units. For example, the first peripheral region of the array substrate includes a plurality of common electrode lines extending along the first direction.

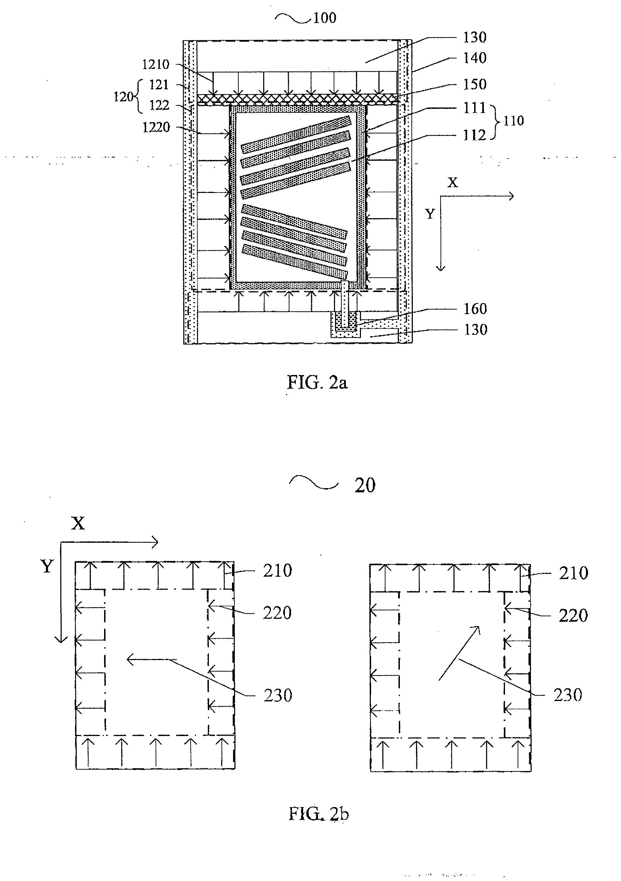

For example, FIG. 2a is a schematic view illustrating a pixel unit 100 on a base substrate 10 of an array substrate provided by the embodiment. As illustrated in FIG. 2a, a peripheral region 120 of the pixel unit 100 further includes two scanning lines 130 extending along an X direction and two data lines 140 extending along a Y direction, and the data lines 140 and the scanning lines 130 cross and are insulated from each other. For example, a first peripheral region 121 of the pixel unit 100 of the array substrate includes a common electrode line 150 extending along the X direction. For example, the pixel unit 100 further includes a thin film transistor 160.

For example, as illustrated in FIG. 2a, an active display region 110 of the pixel unit 100 includes a common electrode 111 and a pixel electrode 112, and at least one of the pixel electrode 112 and the common electrode 111 includes a plurality of electrode strips. The embodiment will be described with reference to an example in which the common electrode 111 is a planar electrode, and the pixel electrode 112 is a slit electrode. An electric field having a second electric-field direction 1220 (parallel to the X direction) is formed between the common electrode 111 and data lines 140 on its two sides along the X direction, namely, an electric field parallel to the X direction is formed in a second peripheral region 122 in the pixel unit 100. The second electric field direction 1220 is parallel to a second alignment direction 220 (as illustrated in FIG. 1b) of an alignment film on the second peripheral region 122. An electric field having a first electric-field direction 1210 (parallel to the Y direction) is formed between the common electrode 111 (or the common electrode line 150) and the scanning lines 130, namely, an electric field parallel to the Y direction is formed in the first peripheral region 121 in the pixel unit 100. The first electric-field direction 1210 is parallel to a first alignment direction 210 (as illustrated in FIG. 1b) of the alignment film on the first peripheral region 121. It is to be noted that, the first peripheral region 121 illustrated in FIG. 2a includes the cross position of the first edge and the second edge, and the embodiment is not limited to this. It may also be the case that a second peripheral region as well as a first peripheral region including a common electrode line includes the cross position of a first edge and a second edge.

Liquid crystal molecules on a side of the alignment film far away from the base substrate interact with molecules at a surface of the alignment film, so that long-axis direction of the liquid crystal molecules are parallel to the alignment direction, namely, long axes of the liquid crystal molecules located at the first peripheral region is parallel to the first alignment direction. Likewise, long axes of liquid crystal molecules located at the second peripheral region are parallel to the second alignment direction. After being applied with voltage, liquid crystal molecules located in the peripheral region of the display substrate come under the influence of an electric field parallel to alignment direction of the alignment film located at this region. Namely, liquid crystal molecules located at the peripheral region 120 of the display substrate come under the influence of an electric field having the second electric-field direction 1220 and an electric field having the first electric-field direction 1210 as illustrated in FIG. 2a, and hence, liquid crystal molecules at this region are not deflected. That is, a black-state display effect is rendered by liquid crystal molecules located at the peripheral region, and namely, this plays the light shading role of an ordinary black matrix. Thus, it is possible to decrease the size of the black matrix, raise the aperture ratio of pixels, and promote the transmissivity of the display substrate.

It is to be noted that, display mode of the display substrate provided by the embodiment is an In-Plane Switching (IPS) display mode, and for example, it may be an Advanced-Super Dimensional Switching (ADS) mode, a Fringe Field Switching (FFS) mode, or the like.

For example, the common electrode 111 and the pixel electrode 112 within the active display region 110 in the array substrate 10 provided by the embodiment are each of a transparent, conductive material, and for example, it may include one or more selected from the group consisting of indium tin oxide (ITO), indium zinc oxide (IZO), zinc oxide (ZnO), indium oxide (In₂O₃), indium gallium oxide (IGO). The embodiment does not set a limit to this. In the embodiment, shape and distribution of the common electrode 111 and the pixel electrode 112 within the active display region 110 are not limited to the example illustrated in FIG. 2a. For example, a common electrode 111 and a pixel electrode 112 may be distributed in different layers, namely, one electrode is a planar electrode, and the other electrode is a strip electrode, alternatively, each of them is a strip electrode. For example, a common electrode 111 and a pixel electrode 112 may also be distributed in the same layer and each of them is a strip electrode, and the embodiment does not set a limit to this. Therefore, a third alignment direction on the alignment film located at the active display region is determined based on shape and distribution of the common electrode 111 and the pixel electrode 112.

For example, FIG. 2b is a schematic view illustrating an alignment film disposed on the pixel unit illustrated in FIG. 2a, and as illustrated in the left figure in FIG. 2b, a third alignment direction 230 on the alignment film located at the active display region 110 is the same as the second alignment direction 220. The embodiment is not limited to this, and it may also be the case that a third alignment direction 230 is the same as a first alignment direction 210. As illustrated in the right figure in FIG. 2b, a third alignment direction 230 on the alignment film located at the active display region 110 is parallel to neither of the first alignment direction 210 and the second alignment direction 220, and the third alignment direction 230 in the embodiment is not limited to the direction as illustrated in the right figure in FIG. 2b.

It is to be noted that, direction of an electric field within the active display region is not parallel to the third alignment direction, namely, long-axis direction of liquid crystal located at the active display region is not parallel to direction of the electric field, so as to ensure that liquid crystal molecules located at the active display region can be rotated under the action of the electric field after electrified and represent a light transmitting mode. Thus, when direction of an electric field within the active display region is parallel to neither of electric-field directions in the first peripheral region and in the second peripheral region, the third alignment direction 230 on the alignment film may be the same as the first alignment direction 210 or the second alignment direction 220; when direction of an electric field within the active display region is parallel to electric-field direction in the first peripheral region or in the second peripheral region, the third alignment direction 230 on the alignment film may be parallel to neither of the first alignment direction 210 and the second alignment direction 220. However, the embodiment is not limited to this. For example, when direction of an electric field within an active display region is parallel to electric-field direction in a first peripheral region, a third alignment direction on an alignment film may be the same as a second alignment direction.

For example, the alignment film is an optical alignment film, i.e., an alignment film made by irradiating material that is an ultraviolet photosensitive polymer monomer with ultraviolet light, and the alignment film engenders anisotropy owing to optical alignment reactions (e.g. dimerization reaction, decomposition reaction, isomerization reaction, optical realignment reaction, and so on). Liquid crystal molecules interact with molecules at a surface of the alignment film, and in order to reach a stable state with the minimum energy, liquid crystal molecules are arranged along a direction in which the force acting on them is the biggest one as defined by optical alignment.

For example, the display substrate is a color filter substrate, and an alignment film on one pixel unit of the color filter substrate is illustrated in FIG. 2b. For example, a first alignment direction 210 (or a second alignment direction 220) of the alignment film on a first peripheral region (or a second peripheral region) in the color filter substrate is such an alignment direction that is the same as the Y direction (or the same as the X direction) or opposite the Y direction (or opposite the X direction). Namely, the first alignment direction 210 (or the second alignment direction 220) is two alignment directions perpendicular to the X (or Y) direction.

For example, a third alignment direction 230 of the alignment film on an active display region in the color filter substrate may be the same as the first alignment direction 210 or the second alignment direction 220. For example, the third alignment direction 230 of the alignment film on the active display region in the color filter substrate may be parallel to neither of the first alignment direction 210 and the second alignment direction 220, an in this case, the third alignment direction on the alignment film in the color filter substrate needs to be parallel to a third alignment direction on an alignment film in an array substrate. Moreover, the third alignment directions on the two alignment films are assured of being parallel to neither of electric-field directions in active display regions, so as to achieve the case that liquid crystal molecules located at the active display regions can be rotated under the action of the electric fields after electrified and represent a light transmitting mode.

Because liquid crystal molecules located at the first peripheral region and the second peripheral region of the color filter substrate come under the mutual influence of molecules at a surface of the alignment film in the regions, long axes of liquid crystal molecules are parallel to the first alignment direction or the second alignment direction. While the first alignment direction or the second alignment direction is parallel to directions of electric fields generated within the two regions, respectively, and thus, liquid crystal molecules located at the peripheral region are not rotated under the action of electric fields. That is, a black-state display effect is rendered by liquid crystal molecules located at the peripheral region, playing a light shading role of an ordinary black matrix. Accordingly, a part of black matrix in the color filter substrate can be replaced by them, so as to achieve effects of decreasing size of the black matrix and raising aperture ratio of pixels.

### Second Embodiment

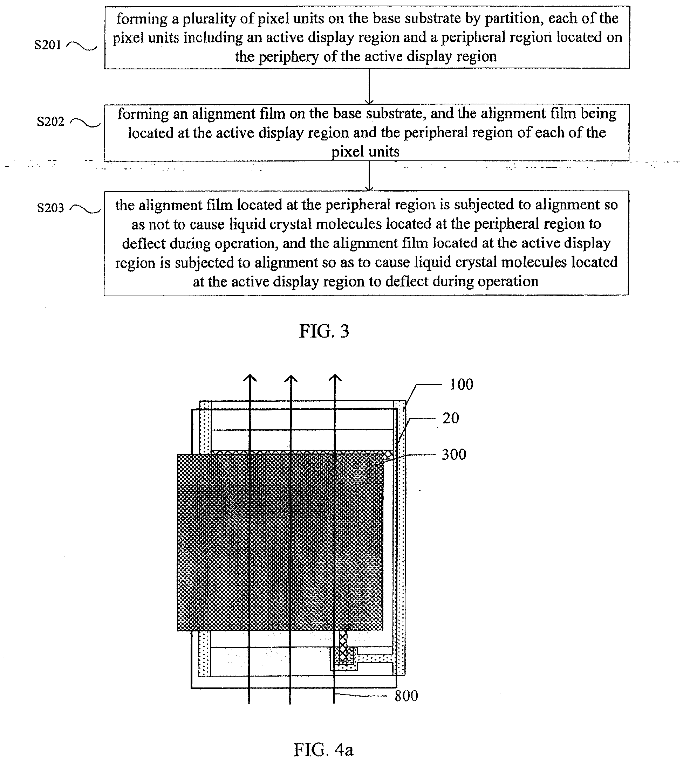

According to the embodiment, there is provided a manufacturing method of a display substrate, and as illustrated in FIG. 3, the manufacturing method includes the following steps S201 to S203.

S201, a plurality of partitioned pixel units are formed on a base substrate by partition, and each of the pixel units includes an active display region and a peripheral region located on the periphery of the active display region.

For example, in one pixel unit 100 on a base substrate as illustrated in a left figure of FIG. 1b, a peripheral region 120 located on the periphery of an active display region 110 includes a first peripheral region 121 that lies at a first edge 101 of the pixel unit 100 extending along an X direction (i.e. a first direction) and a second peripheral region 122 that lies at a second edge 102 of the pixel unit 100 extending along a Y direction (i.e. a second direction). The embodiment is not limited to this, and for example, the first direction and the second direction may interchange. For example, the first direction and the second direction cross and are perpendicular to each other, and the embodiment is not limited to this. It is to be noted that, the display substrate provided by the embodiment may be an array substrate in a liquid crystal display panel, and may also be a color filter substrate, and the embodiment does not set a limit to this.

For example, the display substrate is an array substrate, and forming the peripheral region of the array substrate further includes: forming a plurality of scanning lines extending along the first direction on the base substrate; and forming a plurality of data lines extending along the second direction, wherein the data lines and the scanning lines are insulated from each other, and cross each other to define a plurality of pixel units. For example, forming the first peripheral region of the array substrate further includes a plurality of common electrode lines extending along the first direction on the base substrate,

For example, forming the active display region of the array substrate includes forming a common electrode and a pixel electrode, and at least one of the pixel electrode and the common electrode that have been formed includes a plurality of electrode strips. For example, the embodiment will be described with reference to an example in which the common electrode is a planar electrode. An electric field parallel to the first direction is formed between the common electrode and the data lines on its two sides along the first direction, namely, an electric field parallel to the first direction is formed in the second peripheral region in the pixel unit. An electric field parallel to the second direction is formed between the common electrode (or the common electrode lines) and the scanning lines, namely, an electric field parallel to the second direction is formed in the first peripheral region in the pixel unit. The embodiment is not limited to this.

For example, the common electrode and the pixel electrode may be distributed in different layers, namely, one electrode is a planar electrode, and the other electrode is a strip electrode or a slit electrode, or alternatively, each of them is a strip electrode. For example, the common electrode and the pixel electrode may also be distributed in the same layer and each of them is a strip electrode, and the embodiment does not set a limit to this. It is to be noted that, display mode of the display substrate provided by the embodiment is an In-Plane Switching (IPS) display mode, and for example, it may be an Advanced-Super Dimensional Switching (ADS) mode, a Fringe Field Switching (FFS) mode, or the like.

For example, the display substrate is a color filter substrate, and the formed pixel units are orthographic projections of pixel units on an array substrate disposed in opposition to the color filter substrate onto the color filter substrate. For example, the formed pixel unit includes a black matrix and patterns of chromatic colored layer (e.g., including pattern of a red layer, pattern of a green layer, pattern of a blue layer, and so on) that are formed by etching, development and other procedures, and the embodiment is not limited to this.

S202, an alignment film is formed on the base substrate, and is located in the active display region and the peripheral region of the pixel unit.

For example, the alignment film may be formed by employing a roller coating mode, and the embodiment is not limited to this.

For example, an alignment film layer may be of polyimide or other suitable alignment material, and for example, it is formed by other suitable optical alignment material. The embodiment is not limited to this. For example, it is also possible that an addition having a good adhesion is added into the polyimide material so as to form an alignment film having a better adhesion.

S203, the alignment film located in the periphery region is subjected to alignment so as not to cause liquid crystal molecules in the periphery region to deflect during operation, and the alignment film located in the active display region is subjected to alignment so as to cause liquid crystal molecules in the active display region to deflect during operation.

For example, the alignment film located in the first peripheral region is subjected to alignment so as to form a first alignment direction perpendicular to a first edge, and the alignment film lying in the second peripheral region is subjected to alignment so as to form a second alignment direction perpendicular to a second edge.

For example, in an alignment film 20 on one pixel unit 100 as illustrated in a right figure of FIG. 1b, the alignment film 20 located in a first peripheral region 121 is subjected to alignment so as to form a first alignment direction 210 perpendicular to a first edge 101, and the alignment film 20 located in a second peripheral region 122 is subjected to alignment so as to form a second alignment direction 220 perpendicular to a second edge 102. For example, the first alignment direction 210 is perpendicular to the second alignment direction 220, and the embodiment is not limited to this. It is to be noted that, the alignment film needs to be subjected to alignment, and by doing this, arrangement of liquid crystal molecules can be effectively controlled by it. Alignment technologies mainly include two categories, i.e. a rubbing type and a non-rubbing type. Undesirable problems brought by mechanical friction to alignment films can be avoided by non-rubbing alignment, and the non-rubbing alignment technology includes optical alignment, ion beam alignment and the like. For example, the embodiment will be described with reference to an example in which optical alignment technology is taken to conduct an alignment treatment on the alignment film.

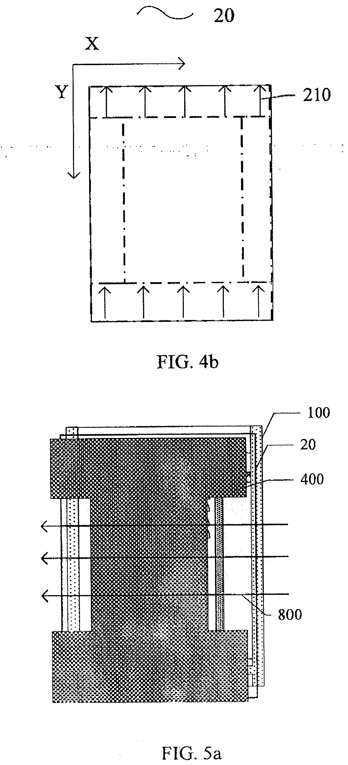

For example, FIG. 4a is a schematic view illustrating optical alignment conducted on an alignment film located at a first peripheral region with a mask provided by the embodiment, and is a schematic view of stereogram including a base substrate, the alignment film and the mask; FIG. 4b is a schematic view illustrating a first alignment direction formed on the alignment film illustrated in FIG. 4a. As illustrated in FIG. 4a and FIG. 4b, forming the first alignment direction 210 perpendicular to the first edge on the alignment film 20 located in the first peripheral region includes: the alignment film 20 located in an active display region and a second peripheral region is shielded with a first mask 300, and then the alignment film 20 is irradiated by light so as to form the first alignment direction 210 perpendicular to an X direction (along which the first edge extends).

For example, as illustrated in FIG. 4a, an optical alignment treatment may be conducted on the alignment film 20 with a linearly polarized ultraviolet light 800 to form the alignment direction perpendicular to the X direction. The embodiment is not limited to this, and for example, a nonlinearly polarized ultraviolet light or the like may also be adopted. For example, wavelength of the ultraviolet light for illumination in optical alignment may be 270 nm to 360 nm, and the embodiment is not limited to this.

For example, as illustrated in FIG. 4b, because the alignment film located in the active display region and the second peripheral region is shielded by the first mask 300, only the alignment film 20 lying in the first peripheral region is subjected to optical alignment with the ultraviolet light 800 so as to form the first alignment direction 210 perpendicular to the X direction.

For example, description is now made with reference to an example in which the display substrate is an array substrate. Liquid crystal molecules on a side of the alignment film 20 far away from the base substrate interact with molecules at a surface of the alignment film, so that long-axis direction of the liquid crystal molecules is parallel to the alignment direction, namely, long axes of the liquid crystal molecules located at the first peripheral region are parallel to the first alignment direction. After being applied with voltage, direction of an electric field in the first peri pheral region of the array substrate is perpendicular to the X direction, namely, it is parallel to the first alignment direction 210 of the alignment film 20 on this region. Consequently, liquid crystal molecules located in the first peripheral region of the display substrate are not deflected under the action of the electric field. That is, a black-state display effect is rendered by liquid crystal molecules located in the first peripheral region, and namely, this plays the light shading role of an ordinary black matrix. Thus, it is possible to decrease the size of the black matrix, raise the aperture ratio of pixels, and promote the transmissivity of the display substrate.

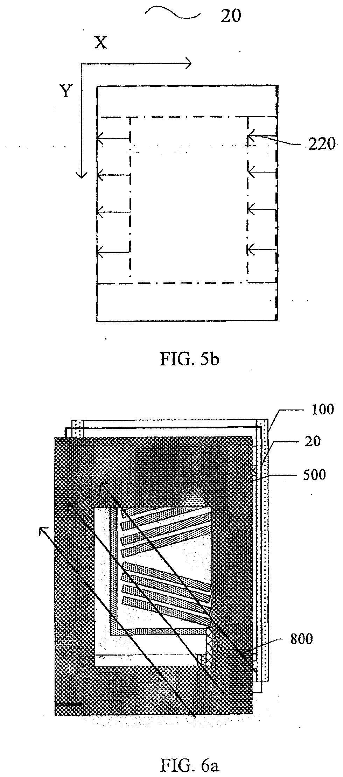

For example, FIG. 5a is a schematic view illustrating optical alignment conducted on an alignment film located at a second peripheral region with a mask provided by the embodiment, and is a schematic view of stereogram including a base substrate, the alignment film and the mask; FIG. 5b is a schematic view illustrating a second alignment direction formed on the alignment film illustrated in FIG. 5a. As illustrated in FIG. 5a and FIG. 5b, forming the second alignment direction 220 perpendicular to the second edge on the alignment film 20 located in the second peripheral region includes: shielding the alignment film located in an active display region and a first peripheral region with a second mask 400, and then irradiating the alignment film 20 by light so as to form the second alignment direction 220 perpendicular to a Y direction (along which the second edge extends).

For example, as illustrated in FIG. 5a, an optical alignment treatment may be conducted on the alignment film 20 with a linearly polarized ultraviolet light 800 to form the alignment direction perpendicular to the Y direction. The embodiment is not limited to this.

For example, as illustrated in FIG. 5b, because the alignment film lying in the active display region and the first peripheral region is shielded by the second mask 400, only the alignment film lying in the second peripheral region is subjected to optical alignment with the ultraviolet light 800 so as to form the second alignment direction 220 perpendicular to the Y direction. Liquid crystal molecules on a side of the alignment film 20 far away from the base substrate interact with molecules at a surface of the alignment film, so that long axes of the liquid crystal molecules located at the second peripheral region are parallel to the second alignment direction 220. For example, upon being applied with voltage, direction of an electric field in the second peripheral region of the array substrate is perpendicular to the Y direction, namely, it is parallel to the second alignment direction 220 of the alignment film 20 on this region. Consequently, liquid crystal molecules located at the second peripheral region of the display substrate are not deflected under the action of the electric field. That is, a black-state display effect is rendered by liquid crystal molecules located at the second peripheral region, and namely, this plays the light shading role of an ordinary black matrix. Thus, it is possible to decrease the size of the black matrix, raise the aperture ratio of pixels, and promote the transmissivity of the display substrate.

In view of the fact that a third alignment direction 230 of the alignment film located at an active display region is determined based on shape and distribution of a common electrode and a pixel electrode, it is just required that the third alignment direction 230 be assured of not being parallel to direction of an electric field produced between the common electrode and the pixel electrode, so as to achieve the case that liquid crystal molecules located at the active display region can be rotated under the action of the electric field upon being applied with voltage and represent a light transmitting mode.

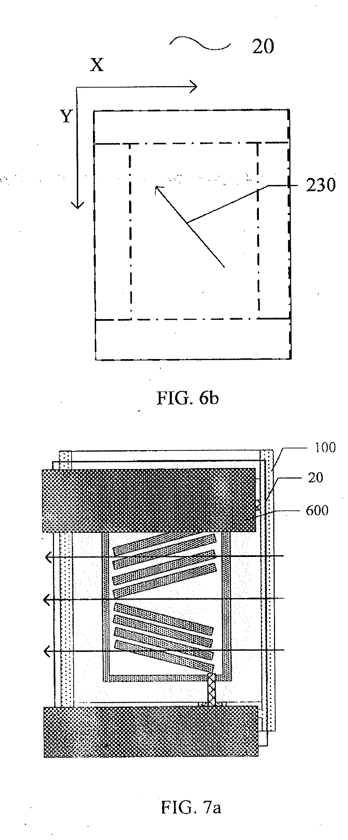

For example, FIG. 6a is a schematic view illustrating optical alignment conducted on an alignment film located at an active display region with a mask provided by the embodiment, and is a schematic view of stereogram including a base substrate, the alignment film and the mask; FIG. 6b is a schematic view illustrating a third alignment direction formed on the alignment film illustrated in FIG. 6a. As illustrated in FIG. 6a and FIG. 6b, forming a third alignment direction 230 of the alignment film lying in the active display region includes, a peripheral region is shielded with a third mask 500, and then the alignment film 20 is irradiated by light (e.g. ultraviolet light 800) so as to form the third alignment direction 230 that is parallel to neither of the first alignment direction and the second alignment direction. The embodiment is not limited by the third alignment direction 230 illustrated in FIG. 6b, and for example, other third alignment direction 230 being parallel to neither of a first alignment direction 210 and a second alignment direction 220 and meanwhile not being parallel to electric-field direction within an active display region is also possible.

For example, as illustrated in FIG. 6b, as the alignment film located at the peripheral region is shielded by the third mask 500, only the alignment film 20 located at the active display region is subjected to optical alignment with the ultraviolet light 800 so as to form the third alignment direction 230.

It is to be noted that, the order in which alignment film in each region is subjected to alignment as illustrated in FIG. 4a to FIG. 6b will not be limited here.

In order to decrease the mask number and decrease the masking alignment times, a third alignment direction being the same as a first alignment direction or a second alignment direction may be formed on an alignment film located at an active display region. It is to be noted that, in case that an electric field within the active display region is parallel to electric-field direction within a first peripheral region, an alignment direction being the same as the second alignment direction is formed on the alignment film located at the active display region; in case that an electric field within the active display region is parallel to electric-field direction within a second peripheral region, an alignment direction being the same as the first alignment direction is formed on the alignment film located at the active display region. That is, it is required that an alignment direction of the alignment film on the active display region be assured of not being parallel to direction of an electric field produced between a common electrode and a pixel electrode, so as to achieve the case that liquid crystal molecules located at the active display region can be rotated under the action of the electric field after electrified and represent a light transmitting mode.

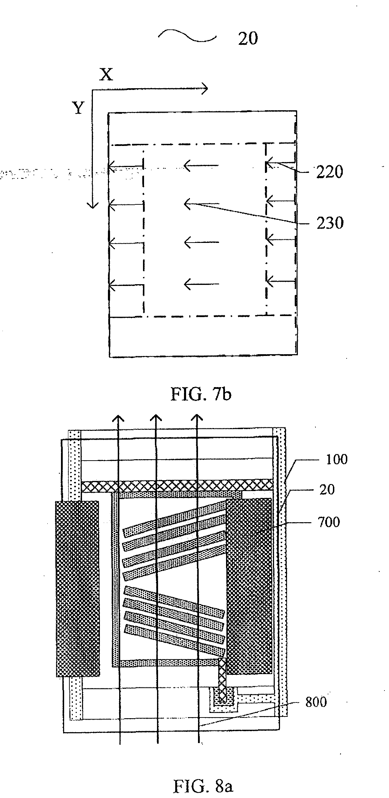

For example, FIG. 7a is a schematic view illustrating optical alignment conducted on an alignment film located at a second peripheral region and an active display region with a mask provided by the embodiment, and is a schematic view of stereogram including a base substrate, the alignment film and the mask; FIG. 7b is a schematic view illustrating an alignment direction formed on the alignment film illustrated in FIG. 7a. As illustrated in FIG. 7a and FIG. 7b, performing alignment of the alignment film 20 located in the second peripheral region and the active display region so as to form an alignment direction perpendicular to a second edge includes, the alignment film located at a first peripheral region is shielded with a fourth mask 600, and then the alignment film 20 is irradiated by light (e.g. linearly polarized ultraviolet light 800) so as to form a second alignment direction 220 and a third alignment direction 230 that arc perpendicular to a Y direction (along which the second edge extends). It is to be noted that, the embodiment has been described with reference to an example in which the first peripheral region includes a place where a first edge and the second edge cross, and the embodiment is not limited to this. Rather, the place where a first edge and a second edge cross may be partitioned into a first peripheral region or a second peripheral region according to actual situations.

For example, as illustrated in FIG. 7b, as the alignment film located at the first peripheral region is shielded by the fourth mask 600, the alignment film located at the second peripheral region and the active display region is subjected to alignment with the ultraviolet light 800 so as to form the second alignment direction 220 and the third alignment direction 230 that are perpendicular to the Y direction. Liquid crystal molecules on a side of the alignment film 20 far away from the base substrate interact with molecules at a surface of the alignment film, so that long axes of the liquid crystal molecules located at the second peripheral region (or an active display region) are parallel to the second alignment direction 220 (or the third alignment direction 230). For example, upon being applied with voltage, direction of an electric field in the second peripheral region of the array substrate is perpendicular to the Y direction, namely, it is parallel to the second alignment direction 220 of the alignment film 20 located at this region. Consequently, liquid crystal molecules located at the second peripheral region of the display substrate are not deflected under the action of the electric field. That is, a black-state display effect is rendered by liquid crystal molecules located at the second peripheral region, and namely, this plays the light shading role of an ordinary black matrix. Thus, it is possible to decrease the size of the black matrix, raise the aperture ratio of pixels, and promote the transmissivity of the display substrate. For example. electric-field direction within the active display region of the array substrate is not parallel to the third alignment direction 230 upon being applied with voltage, and therefore, liquid crystal molecules located at this region will be rotated under the action of an electric field to represent a light transmitting mode.

For example, after the alignment film at the second peripheral region and the active display region is subjected to alignment, the second peripheral region and the active display region may be shielded by the first mask 300 illustrated in FIG. 4a so as to achieve alignment of the first peripheral region. The embodiment is not limited to this sequence. For example, it may also be reversed, that is, an alignment film at a first peripheral region is subjected to alignment firstly, and then the alignment film at a second peripheral region and an active display region is subjected to alignment.

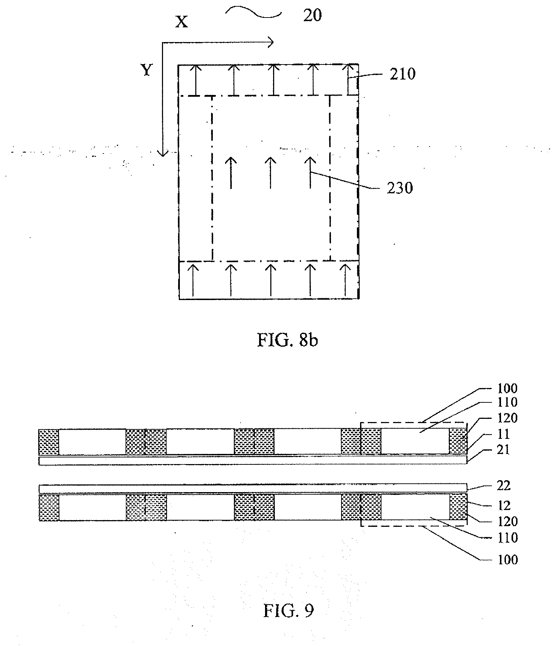

For example, FIG. 8a is a schematic view illustrating optical alignment conducted on an alignment film located at a first peripheral region and an active display region with a mask provided by the embodiment, and is a schematic view of stereogram including a base substrate, the alignment film and the mask; FIG. 8b is a schematic view illustrating an alignment direction formed on the alignment film illustrated in FIG. 8a. As illustrated in FIG. 8a and FIG. 8b, performing alignment of the alignment film 20 located in the first peripheral region and the active display region so as to form an alignment direction perpendicular to a first edge includes, the alignment film located at a second peripheral region is shielded with a fifth mask 700, and then the alignment film 20 is irradiated by light (e.g. linearly polarized ultraviolet light 800) so as to form a first alignment direction 210 and a third alignment direction 230 that are perpendicular to a X direction (along which the first edge extends).

For example, as illustrated in FIG. 8b, as the alignment film located at the second peripheral region is shielded by the fifth mask 700, the alignment film located at the first peripheral region and the active display region is subjected to alignment with the ultraviolet light 800 so as to form the first alignment direction 210 and the third alignment direction 230 that are perpendicular to the X direction. Liquid crystal molecules on a side of the alignment film 20 far away from the base substrate interact with molecules at a surface of the alignment film, so that long axes of the liquid crystal molecules located at the first peripheral region (or an active display region) are parallel to the first alignment direction 210 (or the third alignment direction 230). For example, after electrified, direction of an electric field in the first peripheral region of the array substrate is perpendicular to the X direction, namely, it is parallel to the first alignment direction 210 of the alignment film 20 located at this region. Consequently, liquid crystal molecules located at the first peripheral region of the display substrate are not deflected under the action of the electric field. That is, a black-state display effect is rendered by liquid crystal molecules located at the first peripheral region, and namely, this plays the light shading role of an ordinary black matrix. Thus, it is possible to decrease the size of the black matrix, raise the aperture ratio of pixels, and promote the transmissivity of the display substrate. Because electric-field direction within the active display region of the array substrate is not parallel to the third alignment direction upon being applied with voltage, and therefore, liquid crystal molecules located at this region will be rotated under the action of an electric field to represent a light transmitting mode.

For example, after the alignment film at the first peripheral region and the active display region is subjected to alignment, the first peripheral region and the active display region may be shielded by the second mask 400 illustrated in FIG. 5a so as to achieve alignment of the second peripheral region. The embodiment is not limited to this sequence. For example, it may also be reversed, that is, a second peripheral region is subjected to alignment firstly, and then an alignment film at a first peripheral region and an active display region is subjected to alignment.

For example, the display substrate is a color filter substrate, and a first alignment direction 210 (or a second alignment direction 220) of an alignment film located at a first peripheral region (or a second peripheral region) on one pixel unit of the color filter substrate is illustrated in FIG. 8b (or illustrated in FIG. 7b). The embodiment does not set a limit to this. It is to be noted that, the first alignment direction and the second alignment direction in the alignment film in the color filter substrate are parallel to a first alignment direction and a second alignment direction of an alignment film in an array substrate.

For example, a third alignment direction 230 of the alignment film on an active display region in the color filter substrate may be the same as the first alignment direction 210 or the second alignment direction 220 (as illustrated in FIG. 8b or FIG. 7b), and in this case, the third alignment direction on the alignment film in the color filter substrate needs to be parallel to a third alignment direction on the alignment film in the array substrate. For example, the third alignment direction 230 of the alignment film on the active display region in the color filter substrate may be parallel to neither of the first alignment direction 210 and the second alignment direction 220 (as illustrated in FIG. 6b), an in this case, the third alignment direction on the alignment film in the color filter substrate needs to be parallel to the third alignment direction on the alignment film in the array substrate. Moreover, the third alignment directions on the two alignment films are assured of being parallel to neither of electric-field directions in active display regions, so as to achieve the case that liquid crystal molecules located at the active display regions can be rotated under the action of the electric fields after electrified and represent a light transmitting mode.

Because liquid crystal molecules located at the first peripheral region and the second peripheral region of the color filter substrate come under the mutual influence of molecules at a surface of an alignment film in the regions, long axes of liquid crystal molecules are parallel to the first alignment direction or the second alignment direction. While the first alignment direction or the second alignment direction is parallel to directions of electric fields generated within the two regions, respectively, and thus, liquid crystal molecules located at the peripheral region are not rotated under the action of electric fields. That is, a black-state display effect is rendered by liquid crystal molecules located at the peripheral region, and this plays a light shading role of an ordinary black matrix. Accordingly, a part of black matrix in the color filter substrate can be replaced by them, so as to achieve effects of decreasing size of the black matrix and raising aperture ratio of pixels.

### Third Embodiment

According to the embodiment, there is provided a display panel, and FIG. 9 is a schematically sectional view illustrating a display panel provided by the embodiment. As illustrated in FIG. 9, the display panel includes a plurality of pixel units 100, and each of the pixel units 100 includes an active display region 110 and a peripheral region 120 located on the periphery of the active display region. The peripheral region 120 includes a first peripheral region located at a first edge of the pixel unit 100 extending along a first direction and a second peripheral region located at a second edge of the pixel unit 100 extending along a second direction, and the first direction and the second direction cross each other. The first peripheral region and the second peripheral region here are illustrated in FIG. la and FIG. 1b, and are not illustrated in FIG. 9.

As illustrated in FIG. 9, the display panel includes a first display substrate 11 and a second display substrate 12 disposed in opposition to the first display substrate 11. Pixel units 100 in the first display substrate 11 and the second display substrate 12 correspond on a one-to-one basis, and peripheral regions 120 in the first display substrate 11 and the second display substrate 12 correspond on a one-to-one basis. For example, the first display substrate 11 includes a first alignment film 21 disposed on a side of the first display substrate 11 facing the second display substrate 12, and the second display substrate 12 includes a second alignment film 22 disposed on a side of the second display substrate 12 facing the first display substrate 11. Moreover, the first alignment film 21 and the second alignment film 22 located at the peripheral region 120 are configured not to cause the aligned liquid crystal molecules to deflect upon being applied with voltage, and the first alignment film 21 and the second alignment film 22 located at the active display region are configured to cause the aligned liquid crystal molecules to deflect upon being applied with voltage.

For example, each of alignment directions of the first alignment film 21 and the second alignment film 22 located at a first peripheral region is an alignment direction perpendicular to the first edge, and each of alignment directions of the first alignment film 21 and the second alignment film 22 is an alignment direction perpendicular to the second edge.

It is to be noted that, display mode of the display substrate provided by the embodiment is an In-Plane Switching (IPS) display mode, and for example, it may be an Advanced-Super Dimensional Switching (ADS) mode, a Fringe Field Switching (FFS) mode, or the like.

For example, the display panel further includes a first polarizer (not illustrated in FIG. 9) disposed on a side of the first display substrate facing away from the second display substrate, a second polarizer (not illustrated in FIG. 9) disposed on a side of the second display substrate facing away from the first display substrate, and a liquid crystal layer (not illustrated in FIG. 9) provided between the first display substrate and the second display substrate. It is to be noted that, the display panel is configured to be a normally black display mode on the condition of no externally applied voltage, namely, a light polarizing axis of the first polarizer is perpendicular to a light polarizing axis of the second polarizer.

For example, on the condition of no externally applied voltage, after a natural light enters the first polarizer, a linearly polarized light parallel to long axes of liquid crystal molecules is formed. The polarizing direction cannot rotate, and it is incident onto the second polarizer in the same state. Because the linearly polarized light is perpendicular to a light polarizing axis of the second polarizer. the linearly polarized light is absorbed by the second polarizer. Display appears in a black state, namely, backlight cannot pass the display panel, and the display panel represents a mode of rendering black.

For example, liquid crystal molecules located at the first peripheral region interact with molecules at surfaces of the first alignment film and the second alignment film, so that long axes of the liquid crystal molecules are perpendicular to the first edge, and likewise, long axes of liquid crystal molecules located at the second peripheral region are perpendicular to the second edge. Upon being applied with voltage, liquid crystal molecules located at the peripheral region of the display substrate come under the influence of an electric field parallel to long-axis direction of liquid crystal molecules, and hence, liquid crystal molecules in this region are not deflected. That is, a black-state display effect is rendered by liquid crystal molecules located at the peripheral region, and this plays the light shading role of an ordinary black matrix. Thus, it is possible to decrease the size of the black matrix, raise the aperture ratio of pixels, and promote the transmissivity of the display substrate.

For example, as illustrated in FIG. 9, the first display substrate 11 is an array substrate, and the second display substrate 12 is a color filter substrate. Moreover, an alignment direction of the first alignment film 21 located at the active display region 110 is parallel to an alignment direction of the second alignment film 22 located at the active display region 110, so that on the condition of no externally applied voltage, the active display region 110 has a normally black display mode. For example, an alignment direction of the first alignment film 21 located at the active display region 110 and an alignment direction of the second alignment film 22 located at the active display region 110 are the same or differ by 180 degrees.

The display panel provided by the embodiment is a liquid crystal display panel. With the display panel provided by the embodiment, it is possible that size of black matrix is decreased, aperture ratio of pixels is raised, and transmissivity of the display panel is promoted.

The following points should be noted:
(1) Unless other defined, in the embodiments and drawings of the disclosure, the same reference number represents the same meaning.
(2) Only the structures relevant to the embodiments of the disclosure are involved in the accompanying drawings of the embodiments of the present invention, and other structures may refer to the conventional design.
(3) For clarity, the thickness of layers or areas in the accompanying drawings of the embodiments of the present invention is enlarged. It should be understood that when an element such as a layer, a film, an area or a substrate is referred to be disposed "on" or "under" another element, the element may be "directly" disposed "on" or "under" another clement, or an intermediate element may be provided.

## Claims

1. A display substrate, comprising:
a base substrate (10), on which a plurality of pixel units (100) are formed by partition, each of the pixel units (100) including an active display region (110) and a peripheral region (120) located on the periphery of the active display region (110);
an alignment film (20), disposed on the base substrate (10), and located at the active display region (110) and the peripheral region (120) of each of the pixel units (100),
wherein the alignment film (20) located at the peripheral region (120) is configured not to cause aligned liquid crystal molecules to deflect during operation, and the alignment film (20) located at the active display region (110) is configured to cause the aligned liquid crystal molecules to deflect during operation,
wherein the peripheral region (120) includes a first peripheral region (121) located at a first edge (101) of each of the pixel units (100) that extends along a first direction and a second peripheral region (122) located at a second edge (102) of each of the pixel units (100) that extends along a second direction, the first direction and the second direction cross each other, an alignment direction of the alignment film (20) located at the first peripheral region (121) is a first alignment direction perpendicular to the first edge (101), and an alignment direction of the alignment film (20) located at the second peripheral region (122) is a second alignment direction perpendicular to the second edge (102),
**characterized in that** the first alignment direction is perpendicular to the second alignment direction.

2. The display substrate according to claim 1, wherein an alignment direction of the alignment film (20) located at the active display region (110) is a third alignment direction, and the third alignment direction is the same as the first alignment direction or the second alignment direction.

3. The display substrate according to claim 1, wherein an alignment direction of the alignment film (20) located at the active display region (110) is a third alignment direction, and the third alignment direction is parallel to neither of the first alignment direction and the second alignment direction.

4. The display substrate according to any of claims 1 to 3, wherein the display substrate is an array substrate, and the peripheral region (120) of the array substrate includes: a plurality of scanning lines (130) extending along the first direction; a plurality of data lines (140) extending along the second direction, and the data lines (140) and the scanning lines (130) cross and are insulated from each other.

5. The display substrate according to claim 4, wherein the active display region (110) includes a common electrode (111) and a pixel electrode (112), and at least one of the pixel electrode (112) and the common electrode (111) includes a plurality of electrode strips.

6. The display substrate according to claim 4 or 5, wherein the first peripheral region further includes: a plurality of common electrode lines (150) extending along the first direction.

7. The display substrate according to any of claims 1 to 6, wherein the first direction and the second direction are perpendicular to each other.

8. The display substrate according to any of claims 1 to 7, wherein the alignment film (20) is an optical alignment film.

9. A manufacturing method of a display substrate, comprising:
forming a plurality of pixel units (100) on the base substrate (10) by partition, each of the pixel units (100) including an active display region (110) and a peripheral region (120) located on the periphery of the active display region (110);
forming an alignment film (20) on the base substrate (10), and the alignment film (20) being located at the active display region (110) and the peripheral region (120) of each of the pixel units (100),
wherein the alignment film (20) located at the peripheral region (120) is subjected to alignment so as not to cause liquid crystal molecules located at the peripheral region (120) to deflect during operation, and the alignment film (20) located at the active display region (110) is subjected to alignment so as to cause liquid crystal molecules located at the active display region (110) to deflect during operation,
wherein the peripheral region (120) includes: a first peripheral region (121) located at a first edge (101) of each of the pixel units (100) that extends along a first direction and a second peripheral region (122) located at a second edge (102) of each of the pixel units (100) that extends along a second direction, the first direction and the second direction cross each other, the alignment film (20) located at the peripheral region (120) being subjected to alignment includes: the alignment film (20) located at the first peripheral region (121) being subjected to alignment so as to form a first alignment direction perpendicular to the first edge (101), and the alignment film (20) located at the second peripheral region (122) being subjected to alignment so as to form a second alignment direction perpendicular to the second edge (102),
**characterized in that** the first alignment direction is perpendicular to the second alignment direction.

10. The manufacturing method of the display substrate according to claim 9, wherein the alignment film (20) located at the first peripheral region (121) being subjected to alignment includes:
shielding the alignment film (20) located at the active display region (110) and the second peripheral region (122) with a first mask, and then irradiating the alignment film (20) by light to form the first alignment direction perpendicular to the first edge (101);
wherein the alignment film (20) located at the second peripheral region (122) being subjected to alignment includes:
shielding the alignment film (20) located at the active display region (110) and the first peripheral region (121) with a second mask, and then irradiating the alignment film (20) by light to form the second alignment direction perpendicular to the second edge (102).

11. A display panel, comprising a plurality of pixel units (100), each of which includes an active display region (110) and a peripheral region (120) located on the periphery of the active display region (110),
the display panel including a first display substrate (11) and a second display substrate (12) disposed in opposition to the first display substrate (11),
wherein the first display substrate (11) includes a first alignment film (21) disposed on a side of the first display substrate (11) facing the second display substrate (12), the second display substrate (12) includes a second alignment film (22) disposed on a side of the second display substrate (12) facing the first display substrate (11), and the first alignment film (21) and the second alignment film (22) that are located at the peripheral region (120) are configured not to cause aligned liquid crystal molecules to deflect upon an external voltage being applied, and the first alignment film (21) and the second alignment film (22) that are located at the active display region (110) are configured to cause the aligned liquid crystal molecules to deflect upon the external voltage being applied,
wherein, the peripheral region (120) includes a first peripheral region (121) located at a first edge (101) of each of the pixel units (100) that extends along a first direction and a second peripheral region (122) located at a second edge (102) of each of the pixel units (100) that extends along a second direction, the first direction and the second direction cross each other, each of alignment directions of the first alignment film (21) and the second alignment film (22) located at the first peripheral region (121) is an alignment direction perpendicular to the first edge (101), and each of alignment directions of the first alignment film (21) and the second alignment film (22) located at the second peripheral region (122) is an alignment film perpendicular to the second edge (102),
**characterized in that** the display panel is configured to be a normally black display mode upon no voltage being applied, and **in that** the first alignment direction is perpendicular to the second alignment direction.

12. The display panel according to claim 11, wherein the first display substrate (11) is an array substrate, the second display substrate (12) is a color filter substrate, and the alignment direction of the first alignment film (21) located at the active display region (110) is parallel to the alignment direction of the second alignment film (22) located at the active display region (110).

## Patentansprüche

1. Anzeigesubstrat, aufweisend:
ein Basissubstrat (10), auf dem eine Vielzahl von Pixeleinheiten (100) durch Unterteilung gebildet sind, wobei jede der Pixeleinheiten (100) einen aktiven Anzeigebereich (110) und einen peripheren Bereich (120) am Rand des aktiven Anzeigebereichs (110) aufweist;
eine Ausrichtungsdünnschicht (20), die auf dem Basissubstrat (10) angeordnet ist und sich an dem aktiven Anzeigebereich (110) und dem peripheren Bereich (120) jeder der Pixeleinheiten (100) befindet,
wobei die Ausrichtungsdünnschicht (20) im peripheren Bereich (120) so konfiguriert ist, dass ausgerichtete Flüssigkristallmoleküle während des Betriebs nicht abgelenkt werden, und die Ausrichtungsdünnschicht (20) im aktiven Anzeigebereich (110) so konfiguriert ist, dass die ausgerichteten Flüssigkristallmoleküle während des Betriebs abgelenkt werden,
wobei der periphere Bereich (120) einen ersten peripheren Bereich (121) an einer ersten Kante (101) jeder der Pixeleinheiten (100), die sich entlang einer ersten Richtung erstreckt, und einen zweiten peripheren Bereich (122) an einer zweiten Kante (102) jeder der Pixel einheiten (100), die sich entlang einer zweiten Richtung erstreckt, aufweist, wobei die erste Richtung und die zweite Richtung einander kreuzen, eine Ausrichtungsrichtung der Ausrichtungsdünnschicht (20) am ersten peripheren Bereich (121) eine erste Ausrichtungsrichtung senkrecht zu der ersten Kante (101) ist, und eine Ausrichtungsrichtung der Ausrichtungsdünnschicht (20) am zweiten peripheren Bereich (122) eine zweite Ausrichtungsrichtung senkrecht zu der zweiten Kante (102) ist,
**dadurch gekennzeichnet, dass** die erste Ausrichtungsrichtung senkrecht zu der zweiten Ausrichtungsrichtung ist.

2. Anzeigesubstrat nach Anspruch 1, wobei eine Ausrichtungsrichtung der Ausrichtungsdünnschicht (20) am aktiven Anzeigebereich (110) eine dritte Ausrichtungsrichtung ist, und die dritte Ausrichtungsrichtung die gleiche ist wie die erste Ausrichtungsrichtung oder die zweite Ausrichtungsrichtung.

3. Anzeigesubstrat nach Anspruch 1, wobei eine Ausrichtungsrichtung der Ausrichtungsdünnschicht (20) am aktiven Anzeigebereich (110) eine dritte Ausrichtungsrichtung ist und die dritte Ausrichtungsrichtung weder zu der ersten Ausrichtungsrichtung noch zu der zweiten Ausrichtungsrichtung parallel ist.

4. Anzeigesubstrat nach einem der Ansprüche 1 bis 3, wobei das Anzeigesubstrat ein Array-Substrat ist und der Randbereich (120) des Array-Substrats aufweist: eine Vielzahl von Abtastleitungen (130), die sich entlang der ersten Richtung erstrecken; eine Vielzahl von Datenleitungen (140), die sich entlang der zweiten Richtung erstrecken, und wobei die Datenleitungen (140) und die Abtastleitungen (130) sich kreuzen und gegeneinander isoliert sind.

5. Anzeigesubstrat nach Anspruch 4, wobei der aktive Anzeigebereich (110) eine gemeinsame Elektrode (111) und eine Pixelelektrode (112) aufweist und mindestens eine der Pixelelektrode (112) und der gemeinsamen Elektrode (111) eine Vielzahl von Elektrodenstreifen aufweist.

6. Anzeigesubstrat nach Anspruch 4 oder 5, wobei der erste periphere Bereich ferner aufweist: eine Vielzahl von gemeinsamen Elektrodenleitungen (150), die sich entlang der ersten Richtung erstrecken.

7. Anzeigesubstrat nach einem der Ansprüche 1 bis 6, wobei die erste Richtung und die zweite Richtung senkrecht zueinander verlaufen.

8. Anzeigesubstrat nach einem der Ansprüche 1 bis 7, wobei die Ausrichtungsdünnschicht (20) eine optische Ausrichtungsdünnschicht ist.

9. Herstellungsverfahren für ein Anzeigesubstrat, aufweisend:
Bilden einer Vielzahl von Pixeleinheiten (100) auf dem Basissubstrat (10) durch Unterteilung, wobei jede der Pixeleinheiten (100) einen aktiven Anzeigebereich (110) und einen peripheren Bereich (120) am Rand des aktiven Anzeigebereichs (110) aufweist;
Bilden einer Ausrichtungsdünnschicht (20) auf dem Basissubstrat (10), wobei die Ausrichtungsdünnschicht (20) an dem aktiven Anzeigebereich (110) und dem peripheren Bereich (120) jeder der Pixeleinheiten (100) angeordnet ist,
wobei die Ausrichtungsdünnschicht (20) im peripheren Bereich (120) einer Ausrichtung derart unterzogen wird, dass Flüssigkristallmoleküle im peripheren Bereich (120) während des Betriebs nicht abgelenkt werden, und die Ausrichtungsdünnschicht (20) im aktiven Anzeigebereich (110) einer Ausrichtung derart unterzogen wird, dass Flüssigkristallmoleküle im aktiven Anzeigebereich (110) während des Betriebs abgelenkt werden,
wobei der periphere Bereich (120) aufweist: einen ersten peripheren Bereich (121) an einer ersten Kante (101) jeder der Pixeleinheiten (100), die sich entlang einer ersten Richtung erstreckt, und einen zweiten peripheren Bereich (122) an einer zweiten Kante (102) jeder der Pixeleinheiten (100), die sich entlang einer zweiten Richtung erstreckt, wobei die erste Richtung und die zweite Richtung einander kreuzen, wobei die Ausrichtungsdünnschicht (20) am peripheren Bereich (120), die der Ausrichtung unterzogen wird, aufweist: die Ausrichtungsdünnschicht (20) am ersten peripheren Bereich (121), die einer Ausrichtung unterzogen wird, um eine erste Ausrichtungsrichtung senkrecht zur ersten Kante (101) zu bilden, und die Ausrichtungsdünnschicht (20) am zweiten peripheren Bereich (122), die einer Ausrichtung unterzogen wird, um eine zweite Ausrichtungsrichtung senkrecht zur zweiten Kante (102) zu bilden,
**dadurch gekennzeichnet, dass** die erste Ausrichtungsrichtung senkrecht zu der zweiten Ausrichtungsrichtung ist.

10. Herstellungsverfahren für das Anzeigesubstrat nach Anspruch 9,
wobei die Ausrichtungsdünnschicht (20) am ersten Randbereich (121), die einer Ausrichtung unterzogen wird, aufweist:
Abschirmen der Ausrichtungsdünnschicht (20) im aktiven Anzeigebereich (110) und im zweiten peripheren Bereich (122) mit einer ersten Maske und dann Bestrahlen der Ausrichtungsdünnschicht (20) mit Licht, um die erste Ausrichtungsrichtung senkrecht zur ersten Kante (101) zu bilden;
wobei die Ausrichtungsdünnschicht (20) am zweiten peripheren Bereich (122), die der Ausrichtung unterzogen wird, aufweist:
Abschirmen der Ausrichtungsdünnschicht (20) im aktiven Anzeigebereich (110) und im ersten peripheren Bereich (121) mit einer zweiten Maske, und anschließend Bestrahlen der Ausrichtungsdünnschicht (20) mit Licht, um die zweite Ausrichtungsrichtung senkrecht zur zweiten Kante (102) zu bilden.

11. Anzeige-Panel mit einer Vielzahl von Pixeleinheiten (100), von denen jede einen aktiven Anzeigebereich (110) und einen am Rand des aktiven Anzeigebereichs (110) angeordneten peripheren Bereich (120) aufweist,
wobei das Anzeige-Panel ein erstes Anzeigesubstrat (11) und ein zweites Anzeigesubstrat (12) aufweist, das gegenüber dem ersten Anzeigesubstrat (11) angeordnet ist,
wobei das erste Anzeigesubstrat (11) eine erste Ausrichtungsdünnschicht (21) aufweist, die auf einer dem zweiten Anzeigesubstrat (12) zugewandten Seite des ersten Anzeigesubstrats (11) angeordnet ist, das zweite Anzeigesubstrat (12) eine zweite Ausrichtungsdünnschicht (22) aufweist, die auf einer dem ersten Anzeigesubstrat (11) zugewandten Seite des zweiten Anzeigesubstrats (12) angeordnet ist, und die erste Ausrichtungsdünnschicht (21) und die zweite Ausrichtungsdünnschicht (22) im peripheren Bereich (120) so konfiguriert sind, dass ausgerichtete Flüssigkristallmoleküle bei Anlegen einer externen Spannung nicht abgelenkt werden, und die erste Ausrichtungsdünnschicht (21) und die zweite Ausrichtungsdünnschicht (22) im aktiven Anzeigebereich (110) so konfiguriert sind, dass die ausgerichteten Flüssigkristallmoleküle bei Anlegen der externen Spannung abgelenkt werden,
wobei der periphere Bereich (120) einen ersten peripheren Bereich (121) an einer ersten Kante (101) jeder der Pixeleinheiten (100), die sich entlang einer ersten Richtung erstreckt, und einen zweiten Umfangsbereich (122) an einer zweiten Kante (102) jeder der Pixeleinheiten (100), die sich entlang einer zweiten Richtung erstreckt, aufweist, wobei die erste Richtung und die zweite Richtung einander kreuzen, wobei jede der Ausrichtungsrichtungen der ersten Ausrichtungsdünnschicht (21) und der zweiten Ausrichtungsdünnschicht (22) in dem ersten peripheren Bereich (121) eine Ausrichtungsrichtung senkrecht zu der ersten Kante (101) ist, und jede der Ausrichtungsrichtungen der ersten Ausrichtungsdünnschicht (21) und der zweiten Ausrichtungsdünnschicht (22) in dem zweiten peripheren Bereich (122) eine Ausrichtungsdünnschicht senkrecht zu der zweiten Kante (102) ist,
**dadurch gekennzeichnet, dass** das Anzeige-Panel so konfiguriert ist, dass es sich in einem normalerweise schwarzen Anzeigemodus befindet, wenn keine Spannung angelegt wird, und dass die erste Ausrichtungsrichtung senkrecht zu der zweiten Ausrichtungsrichtung ist.

12. Anzeige-Panel nach Anspruch 11, wobei das erste Anzeigesubstrat (11) ein Array-Substrat ist, das zweite Anzeigesubstrat (12) ein Farbfiltersubstrat ist und die Ausrichtungsrichtung der ersten Ausrichtungsdünnschicht (21) in dem aktiven Anzeigebereich (110) parallel zu der Ausrichtungsrichtung der zweiten Ausrichtungsdünnschicht (22) in dem aktiven Anzeigebereich (110) ist.

## Revendications

1. Substrat d'affichage, comprenant :
un substrat de base (10) sur lequel une pluralité d'unités de pixel (100) sont formées par partition, chacune des unités de pixel (100) incluant une région d'affichage active (110) et une région périphérique (120) qui est localisée sur la périphérie de la région d'affichage active (110) ; et
un film d'alignement (20) qui est disposé sur le substrat de base (10) et qui est localisé au niveau de la région d'affichage active (110) et de la région périphérique (120) de chacune des unités de pixel (100) ;
dans lequel le film d'alignement (20) qui est localisé au niveau de la région périphérique (120) est configuré de manière à ne pas provoquer une déviation de molécules de cristaux liquides alignées pendant le fonctionnement, et le film d'alignement (20) qui est localisé au niveau de la région d'affichage active (110) est configuré de manière à provoquer une déviation des molécules de cristaux liquides alignées pendant le fonctionnement ; et
dans lequel la région périphérique (120) inclut une première région périphérique (121) qui est localisée au niveau d'un premier bord (101) de chacune des unités de pixel (100) qui est étendu suivant une première direction et une seconde région périphérique (122) qui est localisée au niveau d'un second bord (102) de chacune des unités de pixel (100) qui est étendu suivant une seconde direction, la première direction et la seconde direction se croisent l'une l'autre, une direction d'alignement du film d'alignement (20) qui est localisé au niveau de la première région périphérique (121) est une première direction d'alignement qui est perpendiculaire au premier bord (101) et une direction d'alignement du film d'alignement (20) qui est localisé au niveau de la seconde région périphérique (122) est une deuxième direction d'alignement qui est perpendiculaire au second bord (102) ;
**caractérisé en ce que** la première direction d'alignement est perpendiculaire à la deuxième direction d'alignement.

2. Substrat d'affichage selon la revendication 1, dans lequel une direction d'alignement du film d'alignement (20) qui est localisé au niveau de la région d'affichage active (110) est une troisième direction d'alignement, et la troisième direction d'alignement est la même que la première direction d'alignement ou que la deuxième direction d'alignement.

3. Substrat d'affichage selon la revendication 1, dans lequel une direction d'alignement du film d'alignement (20) qui est localisé au niveau de la région d'affichage active (110) est une troisième direction d'alignement, et la troisième direction d'alignement n'est parallèle ni à la première direction d'alignement, ni à la deuxième direction d'alignement.

4. Substrat d'affichage selon l'une quelconque des revendications 1 à 3, dans lequel le substrat d'affichage est un substrat de matrice, et la région périphérique (120) du substrat de matrice inclut : une pluralité de lignes de balayage (130) qui sont étendues suivant la première direction ; une pluralité de lignes de données (140) qui sont étendues suivant la seconde direction, et les lignes de données (140) et les lignes de balayage (130) se croisent les unes les autres et sont isolées les unes des autres.

5. Substrat d'affichage selon la revendication 4, dans lequel la région d'affichage active (110) inclut une électrode commune (111) et une électrode de pixel (112), et au moins une électrode parmi l'électrode de pixel (112) et l'électrode commune (111) inclut une pluralité de bandes d'électrode.

6. Substrat d'affichage selon la revendication 4 ou 5, dans lequel la première région périphérique inclut en outre : une pluralité de lignes d'électrode commune (150) qui sont étendues suivant la première direction.

7. Substrat d'affichage selon l'une quelconque des revendications 1 à 6, dans lequel la première direction et la seconde direction sont perpendiculaires l'une à l'autre.

8. Substrat d'affichage selon l'une quelconque des revendications 1 à 7, dans lequel le film d'alignement (20) est un film d'alignement optique.

9. Procédé de fabrication d'un substrat d'affichage, comprenant :
la formation d'une pluralité d'unités de pixel (100) sur le substrat de base (10) par partition, chacune des unités de pixel (100) incluant une région d'affichage active (110) et une région périphérique (120) qui est localisée sur la périphérie de la région d'affichage active (110) ; et
la formation d'un film d'alignement (20) sur le substrat de base (10), et le film d'alignement (20) étant localisé au niveau de la région d'affichage active (110) et de la région périphérique (120) de chacune des unités de pixel (100) ;
dans lequel le film d'alignement (20) qui est localisé au niveau de la région périphérique (120) est soumis à un alignement de manière à ne pas provoquer une déviation de molécules de cristaux liquides qui sont localisées au niveau de la région périphérique (120) pendant le fonctionnement, et le film d'alignement (20) qui est localisé au niveau de la région d'affichage active (110) est soumis à un alignement de manière à provoquer une déviation de molécules de cristaux liquides qui sont localisées au niveau de la région d'affichage active (110) pendant le fonctionnement ; et
dans lequel la région périphérique (120) inclut une première région périphérique (121) qui est localisée au niveau d'un premier bord (101) de chacune des unités de pixel (100) qui est étendu suivant une première direction et une seconde région périphérique (122) qui est localisée au niveau d'un second bord (102) de chacune des unités de pixel (100) qui est étendu suivant une seconde direction, la première direction et la seconde direction se croisent l'une l'autre, le film d'alignement (20) qui est localisé au niveau de la région périphérique (120) étant soumis à un alignement inclut: le film d'alignement (20) qui est localisé au niveau de la première région périphérique (121) étant soumis à un alignement de manière à former une première direction d'alignement qui est perpendiculaire au premier bord (101), et le film d'alignement (20) qui est localisé au niveau de la seconde région périphérique (122) étant soumis à un alignement de manière à former une deuxième direction d'alignement qui est perpendiculaire au second bord (102) ;
**caractérisé en ce que** la première direction d'alignement est perpendiculaire à la deuxième direction d'alignement.

10. Procédé de fabrication du substrat d'affichage selon la revendication 9, dans lequel :
le film d'alignement (20) qui est localisé au niveau de la première région périphérique (121) étant soumis à un alignement inclut :
la protection du film d'alignement (20) qui est localisé au niveau de la région d'affichage active (110) et de la seconde région périphérique (122) à l'aide d'un premier masque, puis l'irradiation du film d'alignement (20) par une lumière pour former la première direction d'alignement qui est perpendiculaire au premier bord (101) ; et dans lequel :
le film d'alignement (20) qui est localisé au niveau de la seconde région périphérique (122) étant soumis à un alignement inclut :
la protection du film d'alignement (20) qui est localisé au niveau de la région d'affichage active (110) et de la première région périphérique (121) à l'aide d'un second masque, puis l'irradiation du film d'alignement (20) par une lumière pour former la deuxième direction d'alignement qui est perpendiculaire au second bord (102).

11. Panneau d'affichage, comprenant une pluralité d'unités de pixel (100) dont chacune inclut une région d'affichage active (110) et une région périphérique (120) qui est localisée sur la périphérie de la région d'affichage active (110) ;
le panneau d'affichage incluant un premier substrat d'affichage (11) et un second substrat d'affichage (12) qui est disposé en opposition par rapport au premier substrat d'affichage (11) ;
dans lequel le premier substrat d'affichage (11) inclut un premier film d'alignement (21) qui est disposé sur un côté du premier substrat d'affichage (11) qui fait face au second substrat d'affichage (12), le second substrat d'affichage (12) inclut un second film d'alignement (22) qui est disposé sur un côté du second substrat d'affichage (12) qui fait face au premier substrat d'affichage (11), et le premier film d'alignement (21) et le second film d'alignement (22) qui sont localisés au niveau de la région périphérique (120) sont configurés de manière à ne pas provoquer une déviation de molécules de cristaux liquides alignées suite à l'application d'une tension externe, et le premier film d'alignement (21) et le second film d'alignement (22) qui sont localisés au niveau de la région d'affichage active (110) sont configurés de manière à provoquer une déviation des molécules de cristaux liquides alignées suite à l'application de la tension externe ; et
dans lequel la région périphérique (120) inclut une première région périphérique (121) qui est localisée au niveau d'un premier bord (101) de chacune des unités de pixel (100) qui est étendu suivant une première direction et une seconde région périphérique (122) qui est localisée au niveau d'un second bord (102) de chacune des unités de pixel (100) qui est étendu suivant une seconde direction, la première direction et la seconde direction se croisent l'une l'autre, chacune de directions d'alignement du premier film d'alignement (21) et du second film d'alignement (22) qui sont localisés au niveau de la première région périphérique (121) est une direction d'alignement qui est perpendiculaire au premier bord (101) et chacune de directions d'alignement du premier film d'alignement (21) et du second film d'alignement (22) qui sont localisés au niveau de la seconde région périphérique (122) est une direction d'alignement qui est perpendiculaire au second bord (102) ;
**caractérisé en ce que** le panneau d'affichage est configuré pour être dans un mode d'affichage normalement noir lorsqu'aucune tension n'est appliquée, et **en ce que** la première direction d'alignement est perpendiculaire à la deuxième direction d'alignement.

12. Panneau d'affichage selon la revendication 11, dans lequel le premier substrat d'affichage (11) est un substrat de matrice, le second substrat d'affichage (12) est un substrat de filtre couleur, et la direction d'alignement du premier film d'alignement (21) qui est localisé au niveau de la région d'affichage active (110) est parallèle à la direction d'alignement du second film d'alignement (22) qui est localisé au niveau de la région d'affichage active (110).
